# EUROPÄISCHE PATENTSCHRIFT

(11) **EP 2 125 329 B1**
(45) Veröffentlichungstag und Bekanntmachung des Hinweises auf die Patenterteilung: **13.04.2011**
(21) Anmeldenummer: 08715949.7
(22) Anmeldetag: 22.02.2008
(51) Int. Cl.: B29C 49/42, B29C 47/06, B29C 49/78, B29C 47/92

(54) **VERFAHREN UND VORRICHTUNG ZUR FORTLAUFENDEN HERSTELLUNG EINES KUNSTSTOFF-VERBUNDROHRES MIT ROHRMUFFE**
METHOD AND DEVICE FOR THE CONTINUOUS MANUFACTURE OF A PLASTIC COMPOSITE PIPE HAVING A CONNECTING SLEEVE
PROCÉDÉ ET DISPOSITIF DE FABRICATION EN CONTINU D'UN TUBE D'ASSEMBLAGE EN MATIÈRE PLASTIQUE AVEC MANCHON DE RACCORD

(30) Priorität: 01.03.2007 DE 202007002954 U
(43) Veröffentlichungstag der Anmeldung: 02.12.2009
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred
(86) Internationale Anmeldenummer: PCT/EP2008/001397
(87) Internationale Veröffentlichungsnummer: WO 2008/104323

(56) Entgegenhaltungen:
- EP-A- 0 681 902
- EP-A- 0 995 579
- EP-A- 1 612 030
- DE-U1- 9 321 573

## Beschreibung

Die Erfindung betrifft ein Verfahren und eine Vorrichtung zur fortlaufenden Herstellung eines aus einem glattwandigen Innenrohr und einem mit diesem verschweißten, mit Querrillen versehenen Außenrohr bestehenden Kunststoff Verbundrohres mit einer Rohrmuffe.

Ein derartiges Verfahren und eine derartige Vorrichtung sind aus der EP 0 995 579 A bekannt,
wobei mit ringförmigen Formausnehmungen versehene, sich auf einer Formstrecke jeweils paarweise zu einer Form mit einer Mittel-Längsachse ergänzende Halbkokillen auf einem Maschinentisch im Kreislauf und in Förderrichtung geführt angeordnet sind,
wobei mindestens ein Paar Halbkokillen mit einer Muffenausnehmung versehen ist,
wobei Einrichtungen zur Erzeugung eines von innen nach außen wirkenden relativen Überdrucks vorgesehen sind,
wobei der Formstrecke ein Spritzkopf eines ersten Extruders vorgeordnet ist,
wobei der Spritzkopf mit einer Außen-Düse zur Extrusion eines Außen-Schlauches und in Förderrichtung nachgeordnet mit einer Innen-Düse zur Extrusion eines Innen-Schlauches und an seinem in Förderrichtung stromabwärts liegenden Ende mit einem Kalibrierdorn versehen ist,
wobei die Innen-Düse mit dem ersten Extruder verbunden ist,
wobei ein zweiter Extruder vorgesehen ist, der mit der Außen-Düse verbunden ist,
wobei eine Steuerung zur Steuerung von Antriebsmotoren des ersten Extruders und des zweiten Extruders vorgesehen ist.

Diese bekannte Vorrichtung und das auf ihr ausgeübte Verfahren haben sich in der Praxis außerordentlich bewährt.

Der Erfindung liegt die Aufgabe zugrunde, das bekannte Verfahren und die bekannte Vorrichtung so weiter zu bilden, dass die Herstellung der Rohrmuffe noch weiter verbessert wird.

Diese Aufgabe wird erfindungsgemäß durch die Merkmale der Ansprüche 1 und 6 gelöst. Die erfindungsgemäße Ausgestaltung führt dazu, dass während des Übergangs von dem normalen mit Querrillen versehenen Rohr in die erweiterte Rohrmuffe der Innen-Schlauch bei der plötzlichen Erweiterung zum im Wesentlichen zylindrischen Abschnitt der Rohrmuffe nicht aufreißt, wodurch dieser sich erweiternde Abschnitt auch besonders stabil wird. Anschließend wird wiederum die für die Herstellung des Innen-Schlauches zur Erzeugung des zylindrischen Abschnitts der Rohrmuffe eingesetzte Schmelzemenge reduziert, aber nur auf ein Maß, das zwischen dem bei der Herstellung des glattwandigen Innenrohres und dem des sich stark erweiternden Übergangsabschnitts liegt.

In Weiterbildung der Erfindung können auch die für den Außen-Schlauch pro Längen- oder Zeit-Einheit eingesetzten Schmelzemengen abschnittsweise verändert werden.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine im Wesentlichen aus zwei Extrudern, einer Formmaschi- ne und einer Nachkühlvorrichtung bestehende Anlage zur Herstellung von Verbundrohren mit Rohr-Muffen in Drauf- sicht in schematischer Darstellung,
- Fig. 2: einen Spritzkopf und das Einlaufende der Formma- schine im Horizontalschnitt und
- Fig. 3 bis 7: einen vertikalen Teil-Längsschnitt durch die Formma- schine in verschiedenen Positionen einer Muffen- Ausnehmung relativ zum Spritzkopf während der Her- stellung einer Rohr-Muffe.

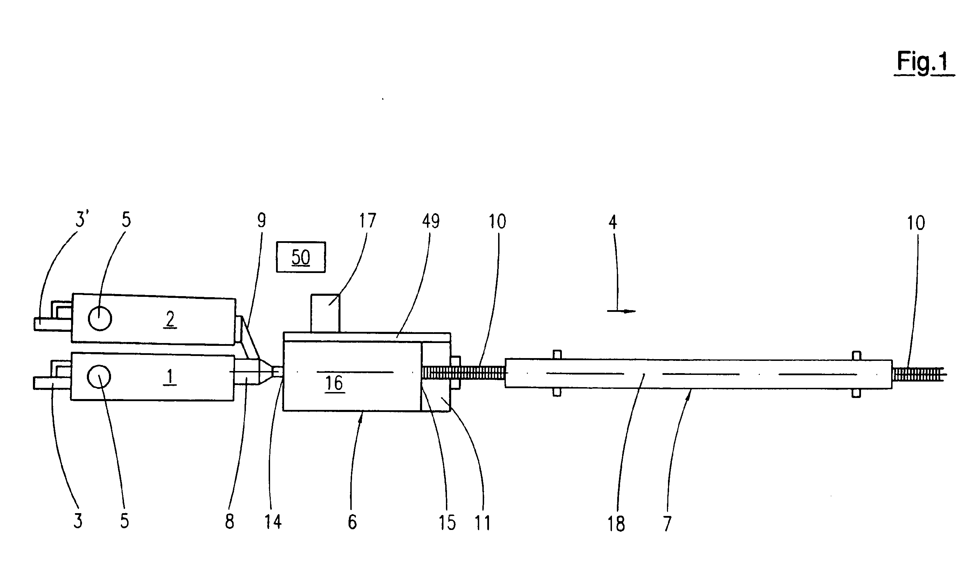

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3' angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein sogenannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B1 (entsprechend US-PS 5,320,797) beschrieben, worauf ausdrücklich verwiesen wird. Sie weist im Wesentlichen einen Maschinentisch 11 auf, auf dem Halbkokillen 12, 12' angeordnet sind, die jeweils zu zwei sogenannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinanderfolgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein Gaskanal 24, der einerseits über ein Ventil an eine Druckgasquelle zum Einblasen von sogenannter Zwischenluft oder andererseits an Atmosphäre oder an ein Teil-Vakuum anschließbar ist.

Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft. Er weist Kühlkanäle 26 auf, durch die Kühlwasser geführt wird, das über eine Kühlwasser-Vorlaufleitung 27 zugeführt und eine Kühlwasser-Rücklaufleitung 28 abgeführt wird. Weiterhin ist eine Luftleitung 29 vorgesehen, die an einen als zusätzlicher Gaskanal dienenden Gasspalt 30 angeschlossen ist, der sich - bezogen auf die Förderrichtung 4 - unmittelbar stromabwärts der Innen-Düse 21 zwischen dem Spritzkopf 8 und dem Kalibrierdorn 25 befindet. Die Leitungen 27, 28, 29 sind durch einen konzentrisch zur Achse 18 im Spritzkopf 8 ausgebildeten, etwa rohrförmigen Versorgungskanal 31 geführt.

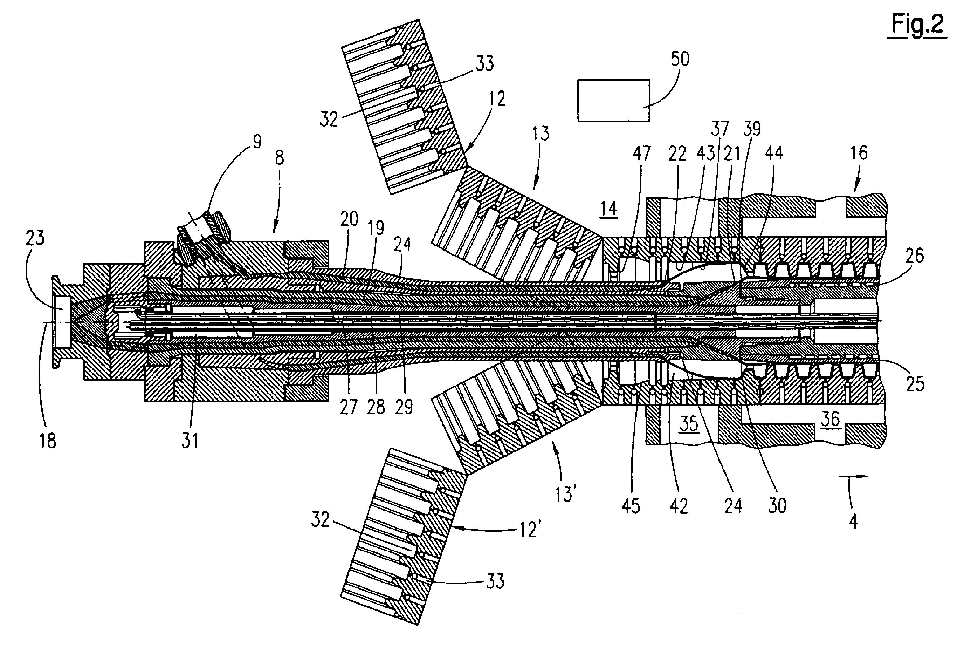

Die Halbkokillen 12, 12' weisen ringförmige Formausnehmungen 32 auf, die in regelmäßigen Abständen hintereinander angeordnet sind, und die jeweils an Teil-Vakuum-Kanäle 33 angeschlossen sind. Beim Einlauf der Halbkokillen 12, 12' in die Formstrecke 16 gelangen die Teil-Vakuum-Kanäle 33 - wie Fig. 2 entnehmbar ist - an Teil-Vakuum-Versorgungsquellen 35 bzw. 36, so dass die Formausnehmungen 32 mit Teil-Vakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 37 extrudiert. Aufgrund des Teil-Vakuums legt sich dieser Schlauch 37 unter Formung eines mit Querrillen 38 versehenen Schlauchs in die Formausnehmungen 32. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 39 aus, der auf den Kalibrier-Dorn 25 gelangt. Dieser erweitert sich von der Innen-Düse 21 in Förderrichtung 4 leicht nach außen, bis der Innen-Schlauch 39 gegen die Wellentäler 40 des Außen-Schlauchs 37 gelangt und hier mit diesem verschweißt wird. Der Innen-Schlauch 39 und der Außen-Schlauch 37 bilden nach Abkühlung unter Erstarrung das Verbundrohr 10.

Wie aus den Figuren 2, 3, 4 ersichtlich ist, sind die Halbkokillen 12, 12' so ausgebildet, dass jeweils in vorgegebenen Abständen innerhalb des endlos hergestellten Verbundrohres 10 Rohr-Muffen 41 ausgebildet werden. Hierzu ist in einem Paar von Halbkokillen 12, 12' eine im Wesentlichen zylindrische Muffen-Ausnehmung 42 ausgebildet, die also eine im Wesentlichen glatte zylindrische Wand 43 aufweist. Zwischen der Wand 43 der Muffen-Ausnehmung 42 und der in Förderrichtung 4 voreilenden Formausnehmung 32 ist ein Übergangsabschnitt 44 ausgebildet. An das - in Förderrichtung 4 - nacheilende Ende der Wand 43 der Muffen-Ausnehmung 42 schließt sich ein kegelstumpfförmiger Formabschnitt 45 an, in dem ein sich nach außen erweiterndes Einführende 46 der Muffe 41 ausgeformt wird. Daran schließt sich wiederum ein Übergangsabschnitt 47 an, der zur nächsten - in Förderrichtung 4 nacheilenden - Formausnehmung 32 führt.

In einer räumlich festen Zuordnung zu der Muffen-Ausnehmung 42 ist ein stabförmiges Schaltglied 48 mit der entsprechenden Halbkokille 12 verbunden, das in noch zu schildernder Weise in einem relativ zum Maschinentisch 11 ortsfest angeordneten Schalter 49 die Abgabe eines Referenzsignals auslöst, das auf eine zentrale, frei programmierbare Steuerung 50 abgegeben wird, die hierüber wiederum die Drehzahlen der Extruder 1, 2 und damit deren Schmelzeausstoß steuert. Über diese Steuerung 50 wird auch die Versorgung des Gaskanals 24 und des Gasspalts 30 gesteuert. Der Schalter 49 ist an einem Haltearm 51 angebracht, der wiederum an der Formmaschine 6 oberhalb der Halbkokillen 12, 12' angebracht ist.

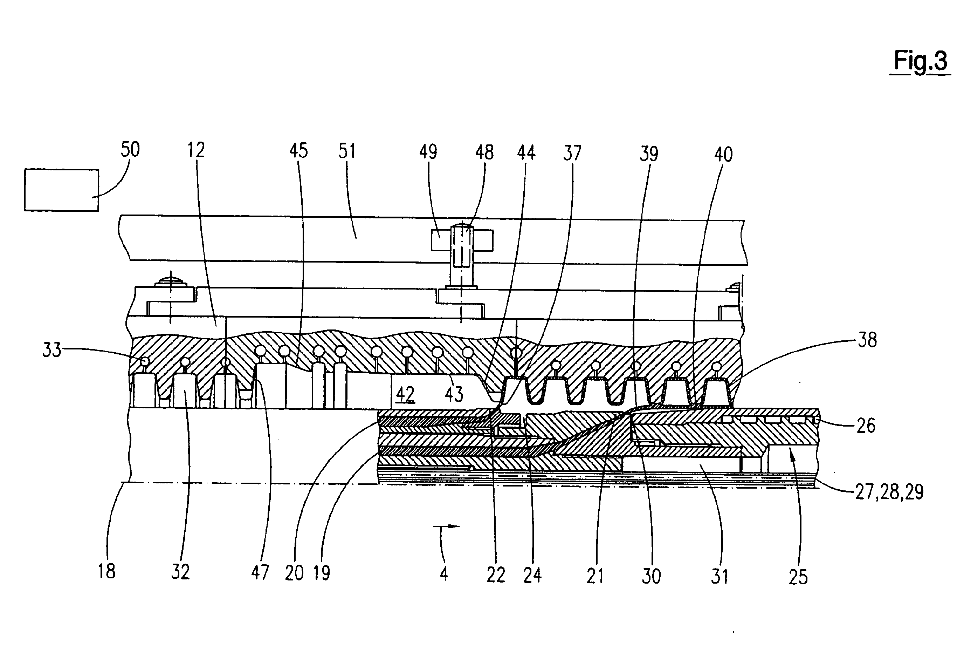

Während der Produktion des normalen gewellten Verbundrohres 10 in der in Fig. 3 rechts dargestellten Form wird der Außen-Schlauch 37 aufgrund des Teil-Vakuums in die Formausnehmungen 32 gezogen und liegt an diesen an. Hierbei wird ein Teil-Vakuum auf den Gasspalt 30 gegeben. Gleichzeitig wird auf den Gaskanal 24 ein geringer Überdruck p1 von 0,2 bis 0,4 bar über Atmosphärendruck gegeben. Durch das Teil-Vakuum innerhalb des Innen-Schlauches 39 wird der Innen-Schlauch 39 an dem Kalibrierdorn 25 gehalten, d. h., kalibriert, während er mit dem Außen-Schlauch 37 verschweißt wird. Durch den leichten Überdruck zwischen Außen-Schlauch 37 und Innen-Schlauch 39 wird sichergestellt, dass beim Abkühlen der an den Wellentälern 40 miteinander verschweißten Schläuche 37, 39 zum gewellten Verbundrohr 10 der Innen-Schlauch 39 nicht nach außen ausgewölbt wird. Beim Abkühlen der Schläuche 37, 39 stellt sich zwischen diesen etwa Atmosphärendruck ein. Während dieser Herstellung des normalen gewellten Verbundrohres 10 laufen die Extruder 1, 2 jeweils mit einer vorgegebenen Drehzahl n 1,1 und n2,1, d. h. sie extrudieren jeweils einen konstanten Massestrom an Kunststoff-Schmelze pro Zeiteinheit.

Wenn in dem in Fig. 3 dargestellten Augenblick der Übergangsabschnitt 44 in den Bereich der Außen-Düse 22 kommt, gelangt das Schaltglied 48 vor den Schalter 49, der dann das bereits erwähnte Referenzsignal auf die Steuerung 50 abgibt. Diese steuert den Antriebsmotor 3' des Extruders 2 derart an, dass seine Drehzahl n2 von n2,1 auf eine Drehzahl n2,2 herabgesetzt wird. Dadurch wird die Extrudiergeschwindigkeit des Extruders 2, d. h. der Massestrom an Kunststoff-Schmelze pro Zeiteinheit, reduziert. Durch die Reduktion der Drehzahl n2 des Extruders 2 von n2,1 auf n2,2 wird also bewirkt, dass der sich an den Übergangsabschnitt 44 der Muffen-Ausnehmung 42 anlegende Außen-Schlauch 37 weniger Kunststoff enthält als in dem Bereich des normalen gewellten Verbundrohres 10, in dem aus ihm ein Außenrohr mit Querrillen 38 geformt wird.

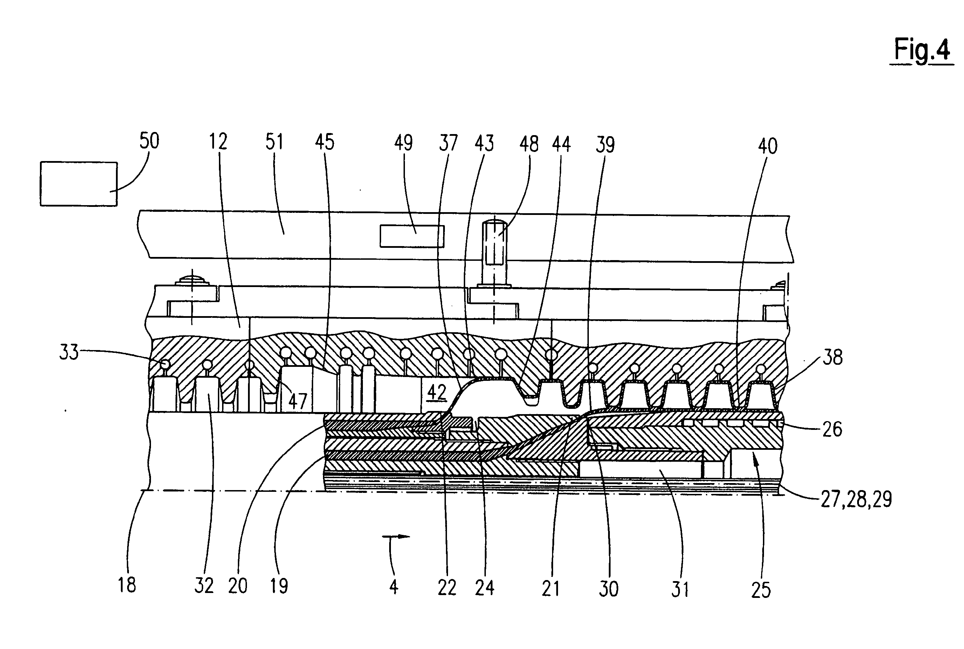

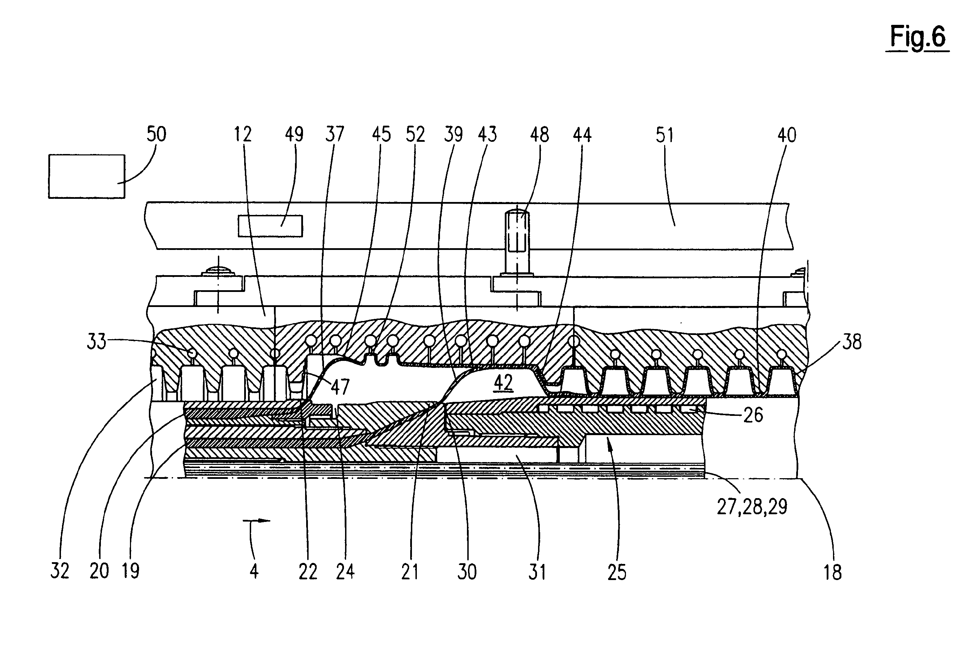

Wenn - etwa entsprechend der Darstellung in Fig. 4 - die Halbkokillen 12, 12' sich soweit weiterbewegt haben, dass der aus der Außen-Düse 22 extrudierte Außen-Schlauch 37 sich an die im Wesentlichen zylindrische Wand 43 der Muffenausnehmung 42 anlegt, dann kann die Drehzahl n2 des Extruders 2 für den Außenschlauch 37 erneut geändert werden, und zwar von n2,2 auf n2,3, um den Schmelzestrom im nahezu zylindrischen Abschnitt der Muffenausnehmung 42 der gewünschten Ausbildung der Rohrmuffe 41 anzupassen. Im weiteren Verlauf der Verformung des Außen-Schlauches 37 in der Wand 43 der Muffenausnehmung 42 kann die Drehzahl n2 des Extruders 2 noch einmal geändert werden, beispielsweise um genügend Schmelze zur Erzeugung von Verstärkungs-Wellungen 52 zur Verfügung zu stellen (siehe Fig. 6).

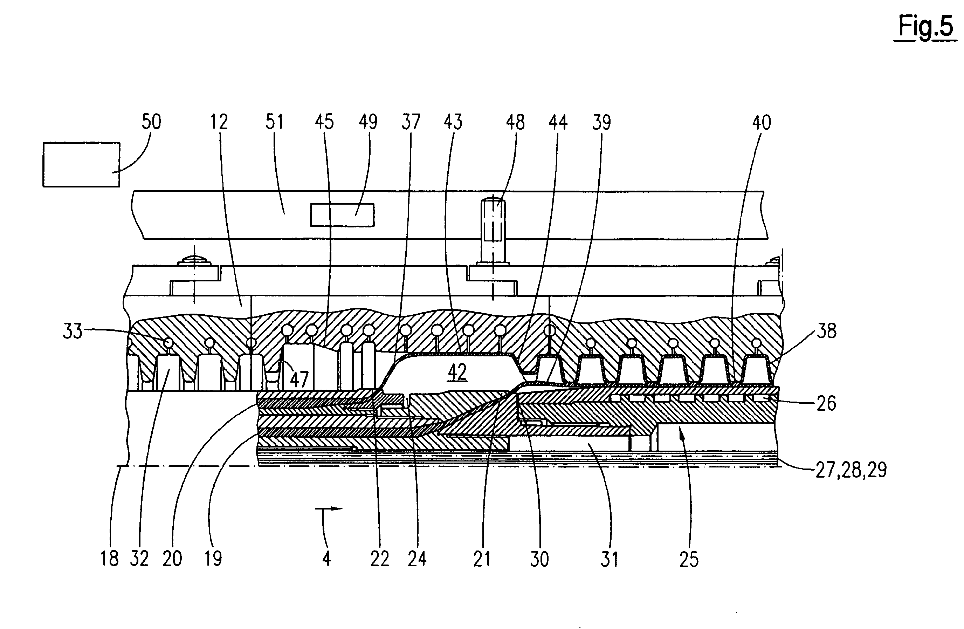

Wenn - entsprechend Fig. 5 - der Übergangsabschnitt 44 in den Bereich der Innen-Düse 21 gelangt, wird die Extruderdrehzahl n1 des den Innen-Schlauch 39 extrudierenden Extruders 1 von der zuvor erwähnten normalen Drehzahl n1.1 auf n1.2 erhöht, um einen größeren Massestrom an Kunststoff-Schmelze pro Zeiteinheit zu extrudieren. Gleichzeitig wird der Gasspalt 30 nicht mehr mit Teil-Vakuum, sondern mit Druckluft mit einem

Überdruck p2 von beispielsweise 0,1 bis 0,45 bar über Atmosphärendruck beaufschlagt. Weiterhin wird in diesem Augenblick der Überdruck p1 von dem Gaskanal 24 genommen und dieser an eine Vakuum-Quelle oder Atmosphäre angeschlossen, so dass der Zwischenraum zwischen Innen-Schlauch 39 und Außen-Schlauch 37 im Bereich der Muffenausnehmung 42 entlüftet wird, so dass der Innen-Schlauch 39 nach außen gegen den Außen-Schlauch 37 gedrückt wird. Durch die Verdickung des Innen-Schlauchs 39 im Bereich des Übergangsabschnitts 44 wird erreicht, dass der aus Kunststoffschmelze bestehende Innen-Schlauch 39 bei der sehr schnellen Durchmessererweiterung nicht aufreißt.

Während der Ausformung des Innen-Schlauches 39 - im Wesentlichen entsprechend Fig. 6 - zur Formung der Rohrmuffe 41 im Bereich des im Wesentlichen zylindrischen Wandabschnitts 43 der Muffenausnehmung 42 wird die Extruderdrehzahl n1 von der erhöhten Drehzahl n1,2 reduziert auf eine Drehzahl n1, 3, die aber wiederum noch größer ist als die normale Drehzahl n1,1. Außer der Absenkung der Extruderdrehzahl n1 des Extruders 1 von n1,2 auf n 1,3 kann zu diesem Zeitpunkt auch eine geringe Absenkung des Drucks p2 des aus dem Gasspalt 30 austretenden Gases auf einen Überdruck p3 erfolgen, da die etwas druckintensivere Ausformung des Innen-Schlauches 39 im Bereich des Übergangsbereichs 44 abgeschlossen ist. Bei der Erzeugung des sich erweiternden Einführende 46 der Rohrmuffe 41 kann die Drehzahl n1 des den Innen-Schlauch 39 erzeugenden Extruders 1 noch einmal erhöht werden auf eine Drehzahl n 1,4, um das Einführende 46 ausreichend stabil zu machen.

Alternativ oder insbesondere kumulativ kann auch die Drehzahl n2 des zweiten Extruders zur Herstellung des Außen-Schlauches 37 verändert werden, und zwar von einer Drehzahl n2,1 während der Herstellung des normalen Verbundrohres 10 mit Querrillen 38 auf eine Drehzahl n2,2 während der Herstellung des Übergangsabschnitts 44. Hier gilt n2,2 > n2,1. Während der Ausformung des Außen-Schlauches 37 - im Wesentlichen entsprechend Fig. 6 - zur Ausformung der Rohrmuffe 41 im Bereich des im Wesentlichen zylindrischen Wandabschnitts 43 der Muffenausnehmung 42 wird die Extruderdrehzahl n2 von der in der Regel also erhöhten Drehzahl n2,2 reduziert auf eine Drehzahl n2,3, für die gilt n2,3 < n2,1.

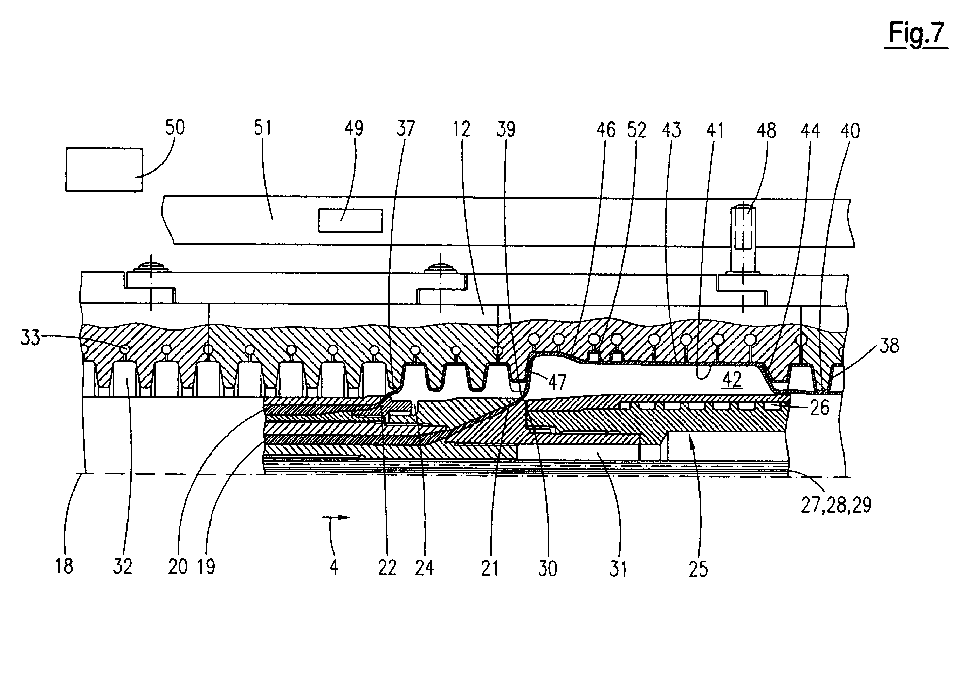

Wenn die Halbkokillen 12, 12' die Positionen entsprechend Fig. 7 erreicht haben, wenn also die Ausformung der Rohrmuffe 41 abgeschlossen ist, dann werden alle Betriebsparameter auf die normalen Verhältnisse zurückgestellt, wie sie vor Beginn der Rohrmuffen-Herstellung waren.

Die die einzelnen Änderungen auslösenden Signale sind - bezogen auf die Bewegung der Halbkokillen 12, 12' - in der Steuerung 50 abgelegt. Es genügt das zu Beginn vom Schalter 49 abgegebene Referenzsignal, um die einzelnen Änderungs-Folgen nacheinander zum jeweils richtigen Zeitpunkt auszulösen.

## Patentansprüche

1. Verfahren zur fortlaufenden Herstellung eines aus einem glatten Innenrohr und einem mit diesem verschweißten, mit Querrillen (38) versehenen Außenrohr bestehenden Kunststoff-Verbundrohres (10) mit einer Rohrmuffe (41),
- wobei mit ringförmigen Formausnehmungen (32) versehene, sich auf einer Formstrecke (16) jeweils paarweise zu einer Form mit einer Mittel-Längsachse (18) ergänzende Halbkokillen (12, 12') im Kreislauf und in einer Förderrichtung (4) geführt werden,
- wobei mindestens ein Paar Halbkokillen (12, 12') mit einer Muffenausnehmung (42) versehen ist,
- wobei ein von innen nach außen wirkender relativer Überdruck erzeugt wird,
- wobei der Formstrecke (16) ein Spritzkopf (8) eines ersten Extruders (1) mit einem Antriebsmotor (3) vorgeordnet ist,
- wobei der Spritzkopf (8) mit einer Außen-Düse (22) und in Förderrichtung (4) nachgeordnet mit einer Innen-Düse (21) und an seinem in Förderrichtung (4) stromabwärts liegenden Ende mit einem Kalibrierdom (25) versehen ist,
- wobei die Innen-Düse (21) mit dem ersten Extruder (1) verbunden ist,
- wobei ein zweiter Extruder (2) mit einem Antriebsmotor (3') vorgesehen ist, der mit der Außen-Düse (22) verbunden ist,
- wobei aus der Innen-Düse (21) ein Innen-Schlauch (39) extrudiert wird,
- wobei aus der Außen-Düse (22) ein Außen-Schlauch (37) aus Kunststoff-Schmelze extrudiert wird,
- **dadurch gekennzeichnet, dass** die Antriebsmotoren (3, 3') derart gesteuert werden,
-- dass die Extruderdrehzahl n1 des ersten Extruders (1) von einer Drehzahl n1,1 während der Herstellung des mit einem glatten Innenrohr und Querrillen (38) bestehenden Verbundrohres auf eine Drehzahl n1, 2 erhöht wird, während ein sich erweiternder Übergangsabschnitt (44) der Muffenausnehmung (42) sich über die Innen-Düse (21) bewegt und
-- dass anschließend die Extruderdrehzahl des ersten Extruders (1) auf eine Drehzahl n1,3 reduziert wird, während die Muffenausnehmung (42) über die Innen-Düse (21) bewegt wird, wobei gilt: n1,2 > n1,3>n1,1.

2. Verfahren nach Anspruch 1, **dadurch gekennzeichnet,**
**dass** die Extruderdrehzahl n1 des ersten Extruders (1), während ein sich nach außen erweiternder Formabschnitt (45) der Muffenausnehmung (42) zur Erzeugung eines Einführendes (46) der Rohrmuffe (41) über die Innen-Düse (21) geführt wird, auf eine Extruderdrehzahl n1,4 erhöht wird, wobei gilt: n1,2 > n1,4 > n1,1

3. Verfahren nach Anspruch 1 oder 2, **dadurch gekennzeichnet,**
**dass** die Extruderdrehzahl n2 des zweiten Extruders (2) bei der Erzeugung des aus einem glatten Innenrohr und einem mit diesem verschweißten, mit Querrillen (38) versehenen Außenrohr bestehenden Verbundrohres von einer Drehzahl n2,1 auf eine Drehzahl n2,2 reduziert wird, während der Übergangsabschnitt (44) über die Außen-Düse (22) geführt wird.

4. Verfahren nach Anspruch 1 oder 2, **dadurch gekennzeichnet,**
**dass** die Extruderdrehzahl n2 des zweiten Extruders (2) bei der Erzeugung des aus einem glatten Innenrohr und einem mit diesem verschweißten, mit Querrillen (38) versehenen Außenrohr bestehenden Verbundrohres von einer Drehzahl n2,1 auf eine Drehzahl n2,2 geändert wird, für die gilt: n2,2 ≥ n2,1 und
**dass** anschließend die Extruderdrehzahl n2 des zweiten Extruders (2) auf eine Drehzahl n2,3 verändert wird, wobei gilt: n2,3≤ n2,1.

5. Verfahren nach einem der Ansprüche 1 bis 3, **dadurch gekennzeichnet,**
**dass** zwischen Innen-Düse (21) und Kalibrierdorn (25) ein zusätzlicher, mit Druckluft unterschiedlichen Drucks beaufschlagbarer, in den Innen-Schlauch (39) mündender Gasspalt (30) ausmündet, und
**dass** der Druck von einem Teil-Vakuum p1, während das glattwandige Innenrohr erzeugt wird, auf einen Druck p2 erhöht wird, während der Übergangsbereich (44) sich über die Innen-Düse (21) bewegt und dass anschließend der Druck auf einen Druck p3 verringert wird, während die Muffenausnehmung (42) über die Innen-Düse (21) bewegt wird, wobei gilt: p 1 < p3 < p2.

6. Vorrichtung zur Durchführung des Verfahrens nach einem der Ansprüche 1 bis 5 zur fortlaufenden Herstellung eines aus einem glatten Innenrohr und einem mit diesem verschweißten, mit Querrillen (38) versehenen Außenrohr bestehenden Kunststoff Verbundrohres (10) mit einer Rohrmuffe (41),
- wobei mit ringförmigen Formausnehmungen (32) versehene, sich auf einer Formstrecke (16) jeweils paarweise zu einer Form mit einer Mittel-Längsachse (18) ergänzende Halbkokillen (12, 12') im Kreislauf und in Förderrichtung (4) geführt angeordnet sind,
- wobei mindestens ein Paar Halbkokillen (12, 12') mit einer Muffenausnehmung (42) versehen ist,
- wobei Einrichtungen zur Erzeugung eines von innen nach außen wirkenden relativen Überdrucks vorgesehen sind,
- wobei der Formstrecke (16) ein Spritzkopf (8) eines ersten Extruders (1) vorgeordnet ist,
- wobei der Spritzkopf (8) mit einer Außen-Düse (22) zur Extrusion eines Außen-Schlauches (37) und in Förderrichtung (4) nachgeordnet mit einer Innen-Düse (21) zur Extrusion eines Innen-Schlauches (39) und an seinem in Förderrichtung (4) stromabwärts liegenden Ende mit einem Kalibrierdorn (25) versehen ist,
- wobei die Innen-Düse (21) mit dem ersten Extruder (1) verbunden ist,
- wobei ein zweiter Extruder (2) vorgesehen ist, der mit der Außen-Düse (22) verbunden ist,
- wobei eine Steuerung (50) zur Steuerung von Antriebsmotoren (3, 3') des ersten Extruders (1) und des zweiten Extruders (2) vorgesehen ist,
- **dadurch gekennzeichnet, dass** die Steuerung (50) derart ausgebildet ist,
-- dass die Extruderdrehzahl n1 des ersten Extruders (1) von einer Drehzahl n1,1 während der Herstellung des mit einem glatten Innenrohr und Querrillen (38) bestehenden Verbundrohres auf eine Drehzahl n1,2 erhöht wird, während ein sich erweiternder Übergangsabschnitt (44) der Muffenausnehmung (42) sich über die Innen-Düse (21) bewegt und
-- dass anschließend die Extruderdrehzahl des ersten Extruders (1) auf eine Drehzahl n1,3 reduziert wird, während die Muffenausnehmung (42) über die Innen-Düse (21) bewegt wird, wobei gilt: n1,2 > n1,3 > n1,1.

7. Vorrichtung nach Anspruch 6, **dadurch gekennzeichnet,**
**dass** die Steuerung (50) derart ausgebildet ist, dass die Extruderdrehzahl n1 des ersten Extruders (1), während ein sich nach außen erweiternder Formabschnitt (45) der Muffenausnehmung (42) zur Erzeugung eines Einführende (46) der Rohrmuffe (41) über die Innen-Düse (21) geführt wird, auf eine Extruderdrehzahl n1,4 erhöht wird, wobei gilt: n1,2 > n1,4 > n1,1.

8. Vorrichtung nach Anspruch 6 oder 7, **dadurch gekennzeichnet,**
**dass** die Steuerung (50) derart ausgebildet ist, dass die Extruderdrehzahl n2 des zweiten Extruders (2) bei der Erzeugung des aus einem glatten Innenrohr und einem mit diesem verschweißten, mit Querrillen (38) versehenen Außenrohr bestehenden Verbundrohres von einer Drehzahl n2,1 auf eine Drehzahl n2,2 reduziert wird, während der Übergangsabschnitt (44) über die Außen-Düse (22) geführt wird.

9. Vorrichtung nach Anspruch 6 oder 7, **dadurch gekennzeichnet,**
**dass** die Steuerung (50) derart ausgebildet ist, dass die Extruderdrehzahl n2 des zweiten Extruders (2) bei der Erzeugung des aus einem glatten Innenrohr und einem mit diesem verschweißten, mit Querrillen (3 8) versehenen Außenrohr bestehenden Verbundrohres von einer Drehzahl n2,1 auf eine Drehzahl n2,2 geändert wird, für die gilt: n2,2 ≥ n2,1 und dass anschließend die Extruderdrehzahl n2 des zweiten Extruders (2) auf eine Drehzahl n2,3 verändert wird, wobei gilt: n2,3 ≤n2,1.

10. Vorrichtung nach einem der Ansprüche 6 bis 8, **dadurch gekennzeichnet,**
**dass** zwischen Innen-Düse (21) und Kalibrierdorn (25) ein zusätzlicher, mit Druckluft unterschiedlichen Drucks beaufschlagbarer Gasspalt (30) ausmündet, und
**dass** die Steuerung (50) derart ausgebildet ist, dass der Druck von einem Teil-Vakuum p1, während das glattwandige Innenrohr erzeugt wird, auf einen Druck p2 erhöht wird, während der Übergangsbereich (44) sich über die Innen-Düse (21) bewegt und dass anschließend der Druck auf einen Druck p3 verringert wird, während die Muffenausnehmung (42) über die Innen-Düse (21) bewegt wird, wobei gilt: p 1 < p3 < p2.

## Claims

1. Method for the continuous production of a plastic compound pipe (10) comprising a pipe socket (41), the plastic compound pipe (10) consisting of a smooth internal tube and an external tube which is welded together therewith and is provided with transverse grooves (38),
- wherein half shells (12, 12') are guided in circulation and in a direction of conveyance (4), which half shells (12, 12') are provided with annular mold recesses (32) and combine in pairs on a molding path (16) to form a mold with a central longitudinal axis (18);
- wherein at least one pair of half shells (12, 12') is provided with a socket recess (42);
- wherein a relative overpressure is generated which acts from an inside to an outside;
- wherein a die head (8) of a first extruder (1) comprising a drive motor (3) is disposed upstream of the molding path (16);
- wherein the die head (8) is provided with an outer die (22) and with an inner die (21) arranged downstream in the direction of conveyance (4) and with a calibrating mandrel (25) at its downstream end when seen in the direction of conveyance (4);
- wherein the inner die (21) is connected to the first extruder (1);
- wherein a second extruder (2) comprising a drive motor (3') is provided which is connected to the outer die (22);
- wherein an internal tube (39) is extruded from the inner die (21),
- wherein an external tube (37) of plastic melt is extruded from the outer die (22);
- **characterized**
**in that** the drive motors (3, 3') are actuated in such a way
- that an extruder speed n1 of the first extruder (1) is increased from a speed n1,1 during the production of the compound pipe consisting of a smooth internal pipe and transverse grooves (38) to a speed n1,2 while an expanding transition portion (44) of the socket recess (42) is moving across the inner die (21); and
-- that the extruder speed of the first extruder (1) is then reduced to a speed n,3 while the socket recess (42) is being moved across the inner die (21), wherein n1,2 > n1,3 > n1,1 applies.

2. Method according to claim 1, **characterized in that** the extruder speed n1 of the first extruder (1) is increased to an extruder speed n1,4 while an outwardly expanding mold portion (45) of the socket recess (42) is being guided across the inner die (21) for forming an insert end (46) of the socket recess (41), wherein n1,2 > n1,4 > n1,1 applies.

3. Method according to claim 1 or 2, **characterized in that** during the production of the compound pipe consisting of a smooth internal tube and an external tube which is welded together therewith and which is provided with transverse grooves (3 8), the extruder speed n2 of the second extruder (2) is reduced from a speed n2,1 to a speed n2,2 while the transition portion (44) is being guided across the outer die (22).

4. Method according to claim 1 or 2, **characterized in that** an extruder speed n2 of the second extruder (2) is changed from a speed n2,1 to a speed n2,2 during the production of the compound pipe consisting of the smooth internal tube and an external tube which is welded together therewith and which is provided with transverse grooves (3 8), to which speed n2,2 applies n2,2 ≥ n2,1; and
**in that** the extruder speed n2 of the second extruder (2) is then changed to a speed n2,3, wherein n2,3 ≤ n2,1 applies.

5. Method according to one of claims 1 to 3, **characterized**
**in that** an additional gas gap (30) leads out between inner die (21) and calibrating mandrel (25) and opens into the internal tube (39), with compressed air of various pressures being applicable to said gas gap (30); and
**in that** the pressure is increased from a partial vacuum p1 while the smooth-wall internal tube is being formed to a pressure p2 while the transition portion (44) is moving across the inner die (21) and that the pressure is then reduced to a pressure p3 while the socket recess (42) is being moved across the inner die (21), wherein p1 < p3 < p2 applies.

6. Device for performing the method according to one of claims 1 to 5 for the continuous production of a plastic compound pipe (10) comprising a pipe socket (41), the compound pipe (10) consisting of a smooth internal tube and an external tube which is welded together therewith and is provided with transverse grooves (3 8),
- wherein half shells (12, 12') are guided in circulation and in a direction of conveyance (4), which half shells (12, 12') are provided with annular mold recesses (32) and combine in pairs on a molding path (16) to form a mold with a central longitudinal axis (18);
- wherein at least one pair of half shells (12, 12') is provided with a socket recess (42);
- wherein means are provided for the generation of a relative overpressure which acts from the inside to the outside;
- wherein a die head (8) of a first extruder (1) is disposed upstream of the molding path (16);
- wherein the die head (8) is provided with an outer die (22) for the extrusion of an external tube (37) and with an inner die (21) arranged downstream in the direction of conveyance (4) for the extrusion of an internal tube (39) and with a calibrating mandrel (25) at its downstream end when seen in the direction of conveyance (4);
- wherein the inner die (21) is connected to the first extruder (1);
- wherein a second extruder (2) is provided which is connected to the outer die (22);
- wherein a control system (50) is provided for the actuation of drive motors (3, 3') of the first extruder (1) and the second extruder (2);
- **characterized**
**in that** the control system (50) is configured in such a way
- that the extruder speed n1 of the first extruder (1) is increased from a speed n1,1 during the production of the compound pipe consisting of a smooth internal pipe and transverse grooves (38) to a speed n1,2 while an expanding transition portion (44) of the socket recess (42) is moving across the inner die (21); and
-- that the extruder speed of the first extruder (1) is then reduced to a speed n1,3 while the socket recess (42) is being moved across the inner die (21), wherein n1,2 > n1,3 > n1,1 applies.

7. Device according to claim 6, **characterized**
**in that** the control system (50) is configured in such a way that the extruder speed n1 of the first extruder (1) is increased to an extruder speed n,4 while an outwardly expanding mold portion (45) of the socket recess (42) is being guided across the inner die (21) for forming an insert end (46) of the socket recess (41), wherein n1,2 > n1,4 > n1,1 applies.

8. Device according to claim 6 or 7, **characterized**
**in that** the control system (50) is configured in such a way that during the production of the compound pipe consisting of a smooth internal tube and an external tube which is welded together therewith and which is provided with transverse grooves (38), the extruder speed n2 of the second extruder (2) is reduced from a speed n2,1 to a speed n2,2 while the transition portion (44) is being guided across the outer die (22).

9. Device according to claim 6 or 7, **characterized**
**in that** the control system (50) is configured in such a way that the extruder speed n2 of the second extruder (2) is changed from a speed n2,1 to a speed n2,2 during the production of the compound pipe consisting of the smooth internal tube and an external tube which is welded together therewith and which is provided with transverse grooves (3 8), to which speed n2,2 applies n2,2 ≥ n2,1; and
**in that** the extruder speed n2 of the second extruder (2) is then changed to a speed n2,3, wherein n2,3 ≤ n2,1 applies.

10. Device according to one of claims 6 to 8, **characterized**
**in that** an additional gas gap (30) leads out between inner die (21) and calibrating mandrel (25), with compressed air of various pressures being applicable to the gas gap (30); and
**in that** the control system (50) is configured in such a way that the pressure is increased from a partial vacuum p1 while the smooth-wall internal tube is being formed to a pressure p2 while the transition portion (44) is moving across the inner die (21) and that the pressure is then reduced to a pressure p3 while the socket recess (42) is being moved across the inner die (21), wherein p1 < p3 < p2 applies.

## Revendications

1. Procédé de fabrication en continu d'un tube mixte (10) en matière plastique avec un manchon (41), composé d'un tube intérieur lisse et d'un tube extérieur pourvu de rainures transversales (38) et soudé au tube intérieur,
- où des demi-lingotières (12, 12') pourvues de cavités de moulage (32) annulaires, se complétant par paires correspondantes sur un parcours de formage (16) pour former un moule avec un axe longitudinal médian (18), sont guidées en circuit et dans une direction de transport (4),
- où au moins une paire de demi-lingotières (12, 12') est pourvue d'une cavité de manchon (42),
- où une surpression relative s'exerçant de l'intérieur vers l'extérieur est générée,
- où une tête d'injection (8) d'une première extrudeuse (1) avec un moteur d'entraînement (3) est disposée en amont du parcours de formage (16),
- où la tête d'injection (8) est pourvue d'une filière extérieure (22), d'une filière intérieure (21) en aval de la filière extérieure dans la direction de transport (4), et d'un mandrin de calibrage (25) à son extrémité en aval dans la direction de transport (4),
- où la filière intérieure (21) est reliée à la première extrudeuse (1),
- où une deuxième extrudeuse (2) est prévue avec un moteur d'entraînement (3'), et est reliée à la filière extérieure (22),
- où un tuyau intérieur (39) est extrudé de la filière intérieure (21),
- où un tuyau extérieur (37) en fonte de matière plastique est extrudé de la filière extérieure (22), **caractérisé en ce que** les moteurs d'entraînement (3, 3') sont commandés de telle façon
- que la vitesse de rotation n1 de la première extrudeuse (1) est élevée d'une vitesse n1,1 à une vitesse n1,2 lors de la fabrication du tube mixte composé d'un tube intérieur lisse et d'un tube extérieur pourvu de rainures transversales (38) et soudé au tube intérieur, pendant qu'une partie de transition (44) évasée de la cavité de manchon (42) se déplace au-dessus de la filière intérieure (21), et
- que la vitesse de rotation de la première extrudeuse (1) est ensuite ramenée à une vitesse n1,3 pendant que la cavité de manchon (42) est déplacée au-dessus de la filière intérieure (21), avec : n1,2 > n1,3 > n1,1.

2. Procédé selon la revendication 1, **caractérisé en ce que** la vitesse de rotation n1 de la première extrudeuse (1) est élevée à une vitesse de rotation d'extrudeuse n1,4 pendant qu'une partie de formage (45) évasée vers l'extérieur de la cavité de manchon (42) est guidée au-dessus de la filière intérieure (21) pour la production d'une extrémité d'insertion (46) du manchon (41), avec : n1,2 > n1,4 > n1,1.

3. Procédé selon la revendication 1 ou la revendication 2, **caractérisé en ce que** la vitesse de rotation n2 de la deuxième extrudeuse (2) est ramenée d'une vitesse n2,1 à une vitesse n2,2 lors de la production du tube mixte composé d'un tube intérieur lisse et d'un tube extérieur pourvu de rainures transversales (38) et soudé au tube intérieur, pendant que la partie de transition (44) est guidée au-dessus de la filière extérieure (22).

4. Procédé selon la revendication 1 ou la revendication 2, **caractérisé en ce que** la vitesse de rotation n2 de la deuxième extrudeuse (2) est variée d'une vitesse n2,1 à une vitesse n2,2 lors de la production du tube mixte composé d'un tube intérieur lisse et d'un tube extérieur pourvu de rainures transversales (38) et soudé au tube intérieur, avec : n2,2 ≥ n2,1, et en **en ce que** la vitesse de rotation n2 de la deuxième extrudeuse (2) est ensuite variée à une vitesse n2,3, avec : n2,3 ≤ n2,1.

5. Procédé selon l'une des revendications 1 à 3, **caractérisé en ce qu'**entre la filière intérieure (21) et le mandrin de calibrage (25) débouche dans le tuyau intérieur (39) une fente de gaz (30) complémentaire, pouvant recevoir de l'air comprimé de pressions différenciées, **en ce que** la pression est élevée d'un vide partiel p1, pendant la production du tube intérieur à paroi lisse, à une pression p2, pendant que la zone de transition (44) se déplace au-dessus de la filière intérieure (21), et **en ce que** la pression est ensuite ramenée à une pression p3, pendant que la cavité de manchon (42) est déplacée au-dessus de la filière intérieure (21), avec : p1 < p3 < p2.

6. Dispositif pour l'exécution du procédé selon l'une des revendications 1 à 5 pour la fabrication en continu d'un tube mixte (10) en matière plastique avec un manchon (41), composé d'un tube intérieur lisse et d'un tube extérieur pourvu de rainures transversales (38) et soudé au tube intérieur,
- où des demi-lingotières (12, 12') pourvues de cavités de moulage (32) annulaires, se complétant par paires correspondantes sur un parcours de formage (16) pour former un moule avec un axe longitudinal médian (18), sont guidées en circuit et dans une direction de transport (4),
- où au moins une paire de demi-lingotières (12, 12') est pourvue d'une cavité de manchon (42),
- où des dispositifs sont prévus pour générer une surpression relative s'exerçant de l'intérieur vers l'extérieur,
- où une tête d'injection (8) d'une première extrudeuse (1) est disposée en amont du parcours de formage (16),
- où la tête d'injection (8) est pourvue d'une filière extérieure (22) pour l'extrusion d'un tuyau extérieur (37), d'une filière intérieure (21) pour l'extrusion d'un tuyau intérieur (39), en aval de la filière extérieure dans la direction de transport (4), et d'un mandrin de calibrage (25) à son extrémité en aval dans la direction de transport (4),
- où la filière intérieure (21) est reliée à la première extrudeuse (1),
- où une deuxième extrudeuse (2) est prévue, reliée à la filière extérieure (22),
- où une commande (50) est prévue pour la commande de moteurs d'entraînement (3, 3') de la première extrudeuse (1) et de la deuxième extrudeuse (2),
**caractérisé en ce que** la commande (50) est réalisée de telle façon,
- que la vitesse de rotation n1 de la première extrudeuse (1) est élevée d'une vitesse n1,1 à une vitesse n1,2 lors de la fabrication du tube mixte composé d'un tube intérieur lisse et d'un tube extérieur pourvu de rainures transversales (38) et soudé au tube intérieur, pendant qu'une partie de transition (44) évasée de la cavité de manchon (42) se déplace au-dessus de la filière intérieure (21), et
- que la vitesse de rotation de la première extrudeuse (1) est ensuite ramenée à une vitesse n1,3 pendant que la cavité de manchon (42) est déplacée au-dessus de la filière intérieure (21), avec : n1,2 > n1,3 > n1,1.

7. Dispositif selon la revendication 6, **caractérisé en ce que** la commande (50) est réalisée de telle façon que la vitesse de rotation n1 de la première extrudeuse (1) est élevée à une vitesse de rotation d'extrudeuse n1,4 pendant qu'une partie de formage (45) évasée vers l'extérieur de la cavité de manchon (42) est guidée au-dessus de la filière intérieure (21) pour la production d'une extrémité d'insertion (46) du manchon (41), avec : n1,2 > n1,4 > n1,1.

8. Dispositif selon la revendication 6 ou la revendication 7, **caractérisé en ce que** la commande (50) est réalisée de telle façon que la vitesse de rotation n2 de la deuxième extrudeuse (2) est ramenée d'une vitesse n2,1 à une vitesse n2,2 lors de la production du tube mixte composé d'un tube intérieur lisse et d'un tube extérieur pourvu de rainures transversales (38) et soudé au tube intérieur, pendant que la partie de transition (44) est guidée au-dessus de la filière extérieure (22).

9. Dispositif selon la revendication 6 ou la revendication 7, **caractérisé en ce que** la commande (50) est réalisée de telle façon que la vitesse de rotation n2 de la deuxième extrudeuse (2) est variée d'une vitesse n2,1 à une vitesse n2,2 lors de la production du tube mixte composé d'un tube intérieur lisse et d'un tube extérieur pourvu de rainures transversales (38) et soudé au tube intérieur, avec : n2,2≥ n2,1, et en **en ce que** la vitesse de rotation n2 de la deuxième extrudeuse (2) est ensuite variée à une vitesse n2,3, avec : n2,3 ≤ n2,1.

10. Dispositif selon l'une des revendications 6 à 8, **caractérisé en ce qu'**entre la filière intérieure (21) et le mandrin de calibrage (25) débouche dans le tuyau intérieur (39) une fente de gaz (30) complémentaire, pouvant recevoir de l'air comprimé de pressions différenciées, et **en ce que** la commande (50) est réalisée de telle façon que la pression est élevée d'un vide partiel p1, pendant la production du tube intérieur à paroi lisse, à une pression p2, pendant que la zone de transition (44) se déplace au-dessus de la filière intérieure (21), et que la pression est ensuite ramenée à une pression p3, pendant que la cavité de manchon (42) est déplacée au-dessus de la filière intérieure (21), avec : p1 < p3 < p2.
